# EUROPEAN PATENT APPLICATION

(11) **EP 3 514 494 A1**
(43) Date of publication of application: **24.07.2019**
(21) Application number: 18152440.6
(22) Date of filing: 19.01.2018
(51) Int. Cl.: G01C 21/32

(54) **CONSTRUCTING AND UPDATING A BEHAVIORAL LAYER OF A MULTI LAYERED ROAD NETWORK HIGH DEFINITION DIGITAL MAP**

(71) Applicant: Zenuity AB, 417 56 Göteborg (SE); Volvo Car Corporation, 405 31 Göteborg (SE)
(72) Inventor: MOHAMMADIHA, Nasser, 414 67 GÖTEBORG (SE); HARDÅ, Peter, 423 49 TORSLANDA (SE); MOVERT, Anders, 426 74 VÄSTRA FRÖLUNDA (SE)
(74) Representative: Bergenstråhle Group AB

(57) **Abstract**

Described herein is a method for constructing and updating a behavioral layer of a multi layered road network high definition digital map (1). By sensors of a plurality of road vehicles (2) travelling through the road network (3) is detected data relating to at least the positions and velocities of static and moving objects (4). Data (5) concerning the detected objects (4) is sent to the cloud (6) for data aggregation. The aggregated data is analyzed to determine or predict behavioral patterns of the detected objects (4) for different segments of the map (1). The determined or predicted behavioral patterns (7) of the detected objects (4) are added to the behavioral layer of the map (1). Also described is a road network high definition map (1) comprising such a behavioral layer as well as a Geographic Information System that is arranged to construct and update such a behavioral layer of a multi layered road network high definition digital map (1).

## Description

### Technical field

The present disclosure relates generally to a method for constructing and updating a behavioral layer of a multi layered road network high definition digital map. It also relates to a road network high definition map comprising such a behavioral layer as well as a Geographic Information System that is arranged to construct and update such a behavioral layer of a multi layered road network high definition digital map.

### Background

One area of technology that is evolving rapidly is the area of autonomous or semi-autonomous drive capabilities for road vehicles. This is enabled through the introduction of vehicle borne sensors, for sensing vehicle motion and surroundings, and vehicle borne actuators, for controlling different road vehicle functionalities, such as steering, throttling and braking. Increased on-board data processing capabilities ties together the vehicle borne sensors and actuators such that autonomous or semi-autonomous drive capabilities are enabled.

When a road vehicle runs in autonomous mode, which means that the driver is not required to perform maneuvers, the road vehicle will usually be dependent on inputs from multiple data sources to perform the autonomous driving. An autonomous road vehicle requires information about its surrounding environment to drive safely. For instance, a detailed description of the road network inside of which it is operating is required for the autonomous road vehicle to cautiously navigate and plan future trajectories. It must also detect and classify surrounding objects, and estimate their physical properties such as positions, velocities and accelerations. To perform such tasks, autonomous road vehicles are usually provided with high definition map information and information from multiple sensors measuring both the internal state of the vehicle as well as its surrounding environment.

Such high definition maps required by autonomous road vehicles differ in several important ways from the maps used today for turn-by-turn directions. Meter-resolution maps may be good enough for Global Positioning System, GPS-based navigation, but autonomous road vehicles need maps that can tell them where the curb is within a few centimeters.

High definition maps are an important component for self-driving road vehicles, i.e. road vehicles having autonomous or semi-autonomous drive capabilities. The main challenges for these maps are related not only to construction of the map but also to updating them over time. As both these procedures are very expensive and unfeasible to be done using a limited amount of resources that might be available, crowdsourcing is being widely used to fulfil this task.

In this context, vehicles or other transportation systems wirelessly send an affordable level of information, as a summary of their detections from their surroundings, to a server. The information is collected in the server and appropriate processing and aggregations are applied to remove the noises and mistakes from the collected data.

The results from these processing's and aggregations are then used to create or update the available maps. Several different layers are usually created for high definition maps, where different levels of information are available at different layers. The focus of such maps is usually to get a physical understanding of the environment, e.g., how many lane markings that are available, where the road signs are located etc.

### Summary

An object of the present invention is to improve utility, construction and updating of a multi layered road network high definition digital map.

This is provided by a method for constructing and updating a behavioral layer of a multi layered road network high definition digital map, the method comprising: detecting by sensors of a plurality of road vehicles travelling through the road network data relating to at least the positions and velocities of static and moving objects; sending data concerning the detected objects to the cloud for data aggregation; analyzing the aggregated data from said plurality of road vehicles to determine or predict behavioral patterns of the detected objects for different segments of the map; and adding the determined or predicted behavioral patterns of the detected objects to the behavioral layer of the map.

In a further embodiment the method further comprises using machine learning to determine or predict the behavioral patterns of the detected objects for the different segments of the map.

In a yet further embodiment the method further comprises using advanced processing of signals from the sensors to determine and classify the type of the detected objects.

In a still further embodiment the method comprises using advanced machine learning and deep learning algorithms in the advanced processing of the sensor signals to determine and classify the type of the detected objects.

In an additional embodiment the method further comprises using in-vehicle systems to perform predictions of the future behavior of detected moving objects and sending data relating to such predictions to the cloud for the data aggregation.

In yet an additional embodiment the method further comprises using advanced prediction methods including at least one of deep learning, Generative Adversarial Nets or Bayesian learning, to perform predictions of both the intentions of the moving objects and their possible near future trajectories.

Furthermore, here envisaged is a road network high definition map comprising a behavioral layer constructed and updated according to the method described herein.

Also, here envisaged is a Geographic Information System that is arranged to construct and update a behavioral layer of a multi layered road network high definition digital map using the method described herein.

The above embodiments have the beneficial effects of providing to a multi layered road network high definition digital map a behavioral layer that can be used to enhance understanding of self-driving vehicles or Advanced Driver Assistance Systems about a surrounding environment. It can also be used by road and traffic authorities to take suitable actions, e.g., to put appropriate traffic signs in place, to minimize the risk of accidents in regions where the behavioral layer indicates a need for such actions.

### Brief description of drawings

In the following, embodiments herein will be described in greater detail by way of example only with reference to attached drawings, in which:
Fig. 1 illustrates schematically a multi layered road network high definition digital map according to an example embodiment;
Fig. 2 illustrates schematically a method for constructing and updating a behavioral layer of a multi layered road network high definition digital map according to an example embodiment.

### Description of embodiments

In the following will be described some example embodiments of a method for constructing and updating a behavioral layer of a multi layered road network high definition digital map 1.

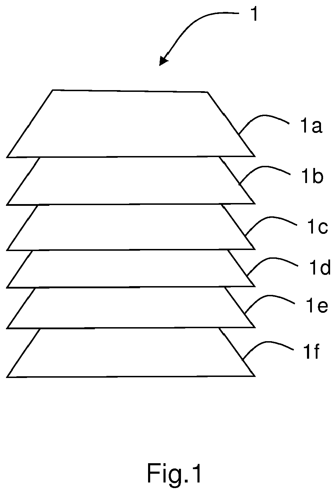

Multi layered digital maps 1, as illustrated schematically in figure 1, can be regarded as maps having a series of layers, e.g. as illustrated layers 1 a through f. These layers may e.g. start with a basemap defining the geometry of the roads, the next layer may provide the map attributes (names, turn restrictions etc.), then on top of that may come community contributed content, then we may e.g. have the 'real road speeds', such as e.g. provided by IQ Routes, etc. Each higher layer of the map 1 provides more information and adds more value to the layers below.

There are many sources for the initial data of the map layers, ranging from Local Authorities, National Planning and Mapping agencies (i.e. Ordnance Survey), driver feedback, MapShare, Satellite Imagery etc.

One important aspect of how we as human drivers observe the environment is through semantics and we can reason and relate several events together. For example, a rushing person close to a tram station while there is a tram approaching the station usually means that the person is rushing to take the tram.

Herein is proposed the addition of a behavioral layer to multi layered road network high definition digital maps 1 where crowdsourcing, data analysis and potentially machine learning are used to create a level describing how other road users usually behave in this part of the map 1.

This information can be used to enhance understanding of self-driving vehicles or Advanced Driver Assistance Systems (ADAS) about a surrounding environment. It can also be used by road and traffic authorities to take suitable actions, e.g. to put appropriate traffic signs in place, to minimize the risk of accidents in regions where the behavioral layer of the map 1 indicates a need for such actions. It may also be possible to determine irregularities in the road network 3, such as e.g. potholes or roadworks.

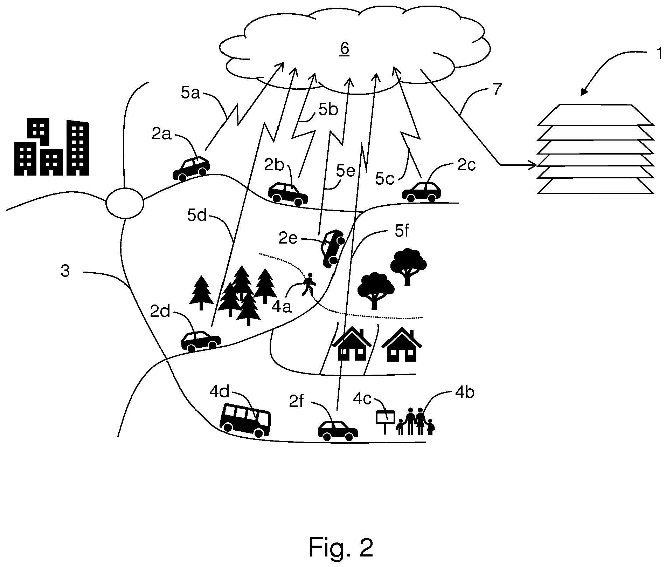

The proposed method comprises detecting by sensors (not shown) of a plurality of road vehicles 2a-f travelling through the road network, e.g. as illustrated schematically in figure 2, data relating to at least the positions and velocities of static and moving objects 4a-d. Thus, it is assumed that the respective vehicles 2a-f are equipped with detection systems such as one or more sensors (e.g. camera, lidar or radar based sensors or fusions of these) by which surrounding objects 4a-d can be detected and their positions and velocities relative to the respective detecting vehicle 2a-f determined.

The method further comprises sending data, illustrated by the broken arrows 5a-f, concerning the detected objects 4a-d to the cloud 6 for data aggregation, e.g. as a spatiotemporal database.

The cloud is a term referring to accessing computer, information technology, and software applications through a network connection, often by accessing data centers using wide area networking or Internet connectivity. Cloud computing enables to consume a computational resource, such as a virtual machine, storage or an application, as a utility.

The data according to the proposed method is suitably sent to the cloud 6 from the respective vehicles 2a-f using well known wireless communication technologies.

According to the proposed method the aggregated data from said plurality of road vehicles 2a-f is analyzed to determine or predict behavioral patterns 7 of the detected objects 4a-d for different segments of the map 1.

Finally, in accordance with a general embodiment of the method, the determined or predicted behavioral patterns 7 of the detected objects 4a-d are added to the behavioral layer of the map 1.

Optionally the method further comprises using machine learning to determine or predict the behavioral patterns 7 of the detected objects 4a-d for the different segments of the map 1.

In further embodiment the method comprises using advanced processing of signals from the sensors to determine and classify the type of the detected objects 4a-d. Possible classifications could e.g. include pedestrian, cyclist, animal, vehicle (car, bus, lorry) etc. It should be noted that fixed static objects, e.g. fixed roadside installations, will normally be determined or predicted to remain static, whereas e.g. static vehicles or individuals could be predicted to move.

In a still further embodiment the method comprises using advanced machine learning and deep learning algorithms in the advanced processing of the sensor signals to determine and classify the type of the detected objects 4a-d.

In an additional embodiment the method further comprises using in-vehicle systems to perform predictions of the future behavior of detected moving objects 4a-d and sending data 5a-f relating to such predictions to the cloud 6 for the data aggregation. Thus, if the systems inside a vehicle 2a-f travelling through the road network 3 detect a pedestrian 4a waiting on the side of the road and the system predicts that the pedestrian intends to cross the street, this information should be also sent to cloud 6. In this case, it is important to also have a notion of uncertainty that can be used to assess the system's confidence in the collected data 5a-f. Then aggregation algorithms in the cloud 6 can use this information to optimally decide on what kind of behavior can be expected in this segment of the road network 3. Thus, if the systems inside several a vehicles 2a-f travelling through the road network 3 detect pedestrians near the same location, crossing the road or predicted to cross the road, this may be an indication that this kind of behavior can be expected at this particular geographical position.

Considering crossing or roundabouts. In crossings, for example when there are no traffic lights, the detected or predicted behavior of other road users and vehicles are sent to the cloud 6 and data analysis is performed to get the main behavior pattern of the road users in different parts of the crossing. This can e.g. be used to abstract the collected information to see how Give Way is being used in a crossing.

In yet an additional embodiment the method further comprises using advanced prediction methods including at least one of deep learning, Generative Adversarial Nets or Bayesian learning, to perform predictions of both the intentions of the moving objects 4a-d and their possible near future trajectories. A predicted trajectory might consist of several possibilities. In such cases, one or several of these predictions can be sent to the cloud 6.

Considering e.g. the example of a bus stop 4c. as illustrated in figure 2. A family detected standing near the bus stop 4c may be predicted to remain standing there if determined that a bus 4d is approaching the bus stop 4c, or alternatively if data from a bus network schedule indicates that a bus 4d is expected at that bus stop 4c within a predetermined timespan.

Furthermore, here envisaged is a road network high definition map 1 comprising a behavioral layer constructed and updated according to the method described herein.

Also, here envisaged is a Geographic Information System (GIS) that is arranged to construct and update a behavioral layer of a multi layered road network high definition digital map 1 using the method described herein.

A map layer is a GIS database containing features representing a particular class or type of real-world entities such as vehicles, cyclists, pedestrians, or animals. A behavioral layer contains both the visual representation of each feature and a link from the feature to its database attributes, e.g. behavioral attributes.

The Geographic Information System or GIS is a computer system that allows you to map, model, query, and analyze large quantities of data within a single database according to their location. The GIS using the method described herein allows constructing and updating a behavioral layer of a multi layered road network high definition digital map 1.

Thus, in accordance with the proposed method is determined what actually takes place in the traffic environment to create a behavioral layer that can be used to determine the probabilities of something occurring at a specific geographical position at a specific point in time.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. Method for constructing and updating a behavioral layer of a multi layered road network high definition digital map (1), the method comprising:
detecting by sensors of a plurality of road vehicles (2) travelling through the road network (3) data relating to at least the positions and velocities of static and moving objects (4);
sending data (5) concerning the detected objects (4) to the cloud (6) for data aggregation;
analysing the aggregated data (5) from said plurality of road vehicles (2) to determine or predict behavioral patterns (7) of the detected objects (4) for different segments of the map (1); and
adding the determined or predicted behavioral patterns (7) of the detected objects (4) to the behavioral layer of the map (1).

2. A method (1) according to claim 1, wherein it further comprises using machine learning to determine or predict the behavioral patterns (7) of the detected objects (4) for the different segments of the map (1).

3. A method (1) according to any one of claims 1 or 2, wherein it further comprises using advanced processing of signals from the sensors to determine and classify the type of the detected objects (4).

4. A method (1) according to claim 3, wherein it further comprises using advanced machine learning and deep learning algorithms in the advanced processing of the sensor signals to determine and classify the type of the detected objects (4).

5. A method (1) according to claim 4, wherein it further comprises using in-vehicle systems to perform predictions of the future behavior of detected moving objects (4) and sending data relating to such predictions to the cloud (6) for the data aggregation.

6. A method (1) according to claim 5, wherein it further comprises using advanced prediction methods including at least one of deep learning, Generative Adversarial Nets or Bayesian learning, to perform predictions of both the intentions of the moving objects (4) and their possible near future trajectories.

7. A road network high definition map (1) comprising a behavioral layer constructed and updated according to the method of any one of claims 1-6.

8. A Geographic Information System that is arranged to construct and update a behavioral layer of a multi layered road network high definition digital map (1) using the method according to any one of claims 1 to 7.
